# EUROPÄISCHE PATENTSCHRIFT

(11) **EP 4 540 155 B1**
(45) Veröffentlichungstag und Bekanntmachung des Hinweises auf die Patenterteilung: **13.05.2026**
(21) Anmeldenummer: 23731152.7
(22) Anmeldetag: 02.06.2023
(51) Int. Cl.: B65G 47/86, B27B 31/00

(54) **ZUTEILER**
FEEDER
DISPOSITIF D'ALIMENTATION

(30) Priorität: 15.06.2022 AT 504262022
(43) Veröffentlichungstag der Anmeldung: 23.04.2025
(73) Patentinhaber: Springer Maschinenfabrik GmbH, 9360 Friesach (AT)
(72) Erfinder: FRISCH, Clemens, 8820 Neumarkt in der Steiermark (AT)
(74) Vertreter: Gibler & Poth Patentanwälte KG
(86) Internationale Anmeldenummer: PCT/EP2023/064824
(87) Internationale Veröffentlichungsnummer: WO 2023/241949

(56) Entgegenhaltungen:
- WO-A1-2020/014790
- US-A- 4 515 196
- US-A- 5 931 287
- US-A1- 2015 353 296

## Beschreibung

Die Erfindung betrifft einen Zuteiler zum Zuteilen von Schnittholzteilen von einem Stauförderer zu einem Mitnehmerförderer gemäß dem Oberbegriff des Patentanspruches 1.

Es ist bekannt, dass bei der Holzverarbeitung Schnittholzteile von einer ungetakteten Förderung in eine taktgebundene Förderung überführt werden. Die ungetakteten Schnittholzteile werden hierzu üblicherweise aufgestaut und von dem Zuteiler einzeln mitgenommen. Für gewöhnlich übergibt der Zuteiler die einzelnen Schnittholzteile an einen Mitnehmerförderer, wobei an jeden Mitnehmer ein Schnittholzteil übergeben wird.

Aus der WO 2020/014790 A1, welche die Merkmale des Oberbegriffs des Anspruchs 1 offenbart, ist ein Zuteiler zum Zuteilen von Schnittholzteilen bekannt, welcher zwischen einem Stauförderer und einem Mitnehmerförderer anordenbar ist. Der Zuteiler weist erste und zweite Klemmelemente zum Einklemmen von Schnittholzteilen auf, welche jeweils mittels Akutatoren ansteuerbar sind. Weiters zeigt eine Ausführungsform des Zuteilers eine Rückstelleinrichtung für die ersten Klemmelemente umfassend eine Führungsbahn. Aus der US 5 931 287 A und der US 2015/0353296 A1 sind weitere Zuteiler bekannt, wobei bei beiden Zuteilern das erste Klemmelement nicht unabhängig von dem zweiten Klemmelement steuerbar ist.

Aus der US 4 515 196 A ist ein Sägewerk mit einem Stützmechanismus für Holzstämme bekannt.

Nachteilig an den derzeit bekannten Zuteilern ist, dass bei einem nicht gewollten Zuteilen von Schnittholzteilen die Schnittholzteile gegen die Förderrichtung des Zuteilers zurückgeschoben werden müssen, wodurch eine Unruhe bei den aufgestauten Bretter verursacht wird. Weiters sind auch derzeit bekannte Zuteiler auf ein bestimmtes Maß von Schnittholzteilen ausgelegt, wobei bei einem Zuteilen von Schnittholzteilen mit einem anderen Maß als das eingestellte Maß die Zuteilung nur eingeschränkt oder ohne Umbauten des Zuteilers nicht möglich ist. Ein weiterer Nachteil an den derzeit bekannten Zuteilern ist, dass diese oftmals die Schnittholzteile nicht ausreichend beschleunigen können, um die Schnittholzteile direkt an einen Mitnehmerförderer übergeben zu können. Dadurch wird oftmals zusätzlich ein Beschleunigungsförderers eingesetzt, welcher zwischen dem Zuteiler und dem Mitnehmerförderer angeordnet ist, um die Schnittholzteile auf die Geschwindigkeit des Mitnehmerförderers zu beschleunigen.

Aufgabe der Erfindung ist es daher einen Zuteiler der eingangs genannten Art anzugeben, mit welchem die genannten Nachteile vermieden werden können, mit welchem ein kontrolliertes Zuteilen von Schnittholzteilen unterschiedlicher Dicken erreicht werden kann und eine Unruhe bei den Schnittholzteile bei einem nicht Zuteilen vermieden werden kann.

Erfindungsgemäß wird dies durch die Merkmale des Patentanspruches 1 erreicht.

Dadurch ergibt sich der Vorteil, dass bei einem Einklemmen eines in der Staulage befindlichen Schnittholzteils der Vorgang des Einklemmens individuell an die Dicke des Schnittholzteils angepasst werden kann. Dadurch können auch Oberflächenbeschädigungen der Schnittholzteile reduziert werden, sodass Schnittholzteile mit unterschiedlichen Dicken und Breiten ohne Umbauarbeiten an dem Zuteiler kontrolliert und schonend aus einer ungetakteten Förderung in eine taktgebundene Förderung überführt werden können. Durch die Steuerung des ersten Klemmelements unabhängig von dem zweiten Klemmelement kann bei einem nicht Zuteilen von Schnittholzteilen eine Unruhe bei den aufgestauten Schnittholzteilen vermieden werden, da einfach und schnell ein Verbleiben der Schnittholzteile in der aufgestauten Lage mittels der Steuervorrichtung angesteuert werden kann. Dadurch können bei einem nicht Zuteilen die Schnittholzteile in der Staulage verbleiben und müssen nicht gegen die Förderrichtung zurückgedrückt werden. Weiters kann durch die unabhängige Steuerung des ersten und des zweiten Klemmelements durch die Steuervorrichtung schnell und einfach eine Einklemmbewegung, welche zum Einklemmen des Schnittholzteils zwischen dem ersten und dem zweiten Klemmelements ausgeführt wird, an unterschiedliche Maßen von Schnittholzteilen angepasst werden. Dadurch kann ein möglichst gleichzeitiges Kontaktieren des Schnittholzteils durch die beiden Klemmelemente erreicht werden, wodurch eine Unruhe bei dem Einklemmen des Schnittholzteils und dadurch auch weiterer in der Staulage befindlichen Schnittholzteile verhindert wird. Dadurch kann ein effizienter und wartungsarmer Zuteiler geschaffen werden mit welchem auch bei einer hohen Taktrate kontrolliert Schnittholzteile von einer ungetakteten Förderung in eine taktgebundene Förderung überführt werden können.

Die Erfindung betrifft weiters ein Verfahren gemäß dem Patentanspruch 12.

Die Erfindung hat daher weiters die Aufgabe ein Verfahren der eingangs genannten Art anzugeben, mit welchem die genannten Nachteile vermieden werden können, mit welchem ein kontrolliertes Zuteilen von Schnittholzteilen unterschiedlicher Dicken erreicht werden kann und eine Unruhe bei den Schnittholzteile bei einem nicht Zuteilen vermieden werden kann.

Erfindungsgemäß wird dies durch die Merkmale des Patentanspruches 12 erreicht.

Die Vorteile des Verfahrens entsprechen den Vorteilen des oben genannten Zuteilers.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 zeigt zumindest Teile einer bevorzugten Ausführungsform eines Zuteilers in einer ersten Stellung,
Fig. 2 zeigt die in Fig. 1 gezeigten Teile der bevorzugten Ausführungsform des Zuteilers in einer zweiten Stellung,
Fig. 3 zeigt die in Fig. 1 gezeigten Teile der bevorzugten Ausführungsform des Zuteilers in einer dritten Stellung,
Fig. 4 zeigt die in Fig. 1 gezeigten Teile der bevorzugten Ausführungsform des Zuteilers in einer vierten Stellung,
Fig. 5 zeigt die in Fig. 1 gezeigten Teile der bevorzugten Ausführungsform des Zuteilers in einer fünften Stellung,
Fig. 6 zeigt eine bevorzugte Ausführungsform eines Zuteilsystems,
Fig. 7 zeigt den in Fig. 6 gezeigten Schnitt nach AA der bevorzugten Ausführungsform des Zuteilsystems.

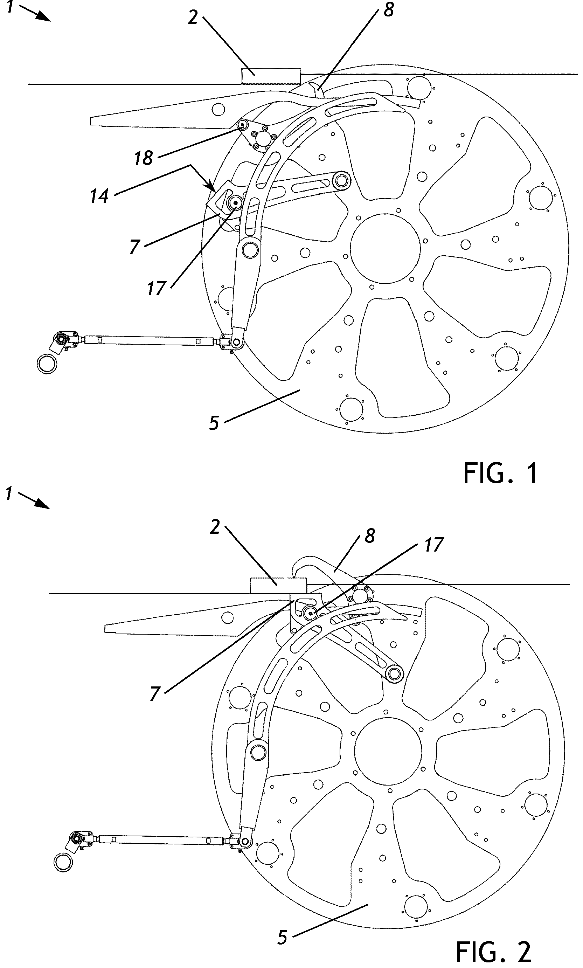

Die Fig. 1 bis 7 zeigen zumindest Teile einer bevorzugten Ausführungsform eines Zuteilers 1 zum Zuteilen von Schnittholzteilen 2 von einem Stauförderer 3 zu einem Mitnehmerförderer 4, wobei der Zuteiler 1 wenigstens ein Rad 5 mit einer Drehachse 6 und wenigstens eine Steuervorrichtung umfasst, wobei an dem Rad 5 zumindest ein erstes Klemmelement 7 und zumindest ein zweites Klemmelement 8 befestigt sind, wobei der Zuteiler 1 dazu ausgebildet ist bei einer Drehung des Rades 5 ein Schnittholzteil 2 in einem Förderbereich 9 zwischen dem ersten und dem zweiten Klemmelement 7, 8 einzuklemmen und in einem eingeklemmten Zustand entlang des Förderbereichs 9 zu transportieren, wobei die Steuervorrichtung dazu ausgebildet ist das erste Klemmelement 7 unabhängig von dem zweiten Klemmelement 8 zu steuern.

Weiters ist ein Zuteilsystem 15 umfassend einen Stauförderer 3 und einen Mitnehmerförderer 4 vorgesehen, wobei der Zuteiler 1 zwischen dem Stauförderer 3 und dem Mitnehmerförderer 4 angeordnet ist, um ein Schnittholzteil 2 von dem Stauförderer 3 zu dem Mitnehmerförderer 4 zu transportieren.

Es ist weiters ein Verfahren zum Zuteilen von Schnittholzteilen 2 von einem Stauförderer 3 zu einem Mitnehmerförderer 4 mit einem Zuteiler 1 vorgesehen, wobei der Zuteiler 1 wenigstens ein Rad 5 mit einer Drehachse 6 und wenigstens eine Steuervorrichtung umfasst, wobei an dem Rad 5 zumindest ein erstes Klemmelement 7 und zumindest ein zweites Klemmelement 8 befestigt sind, wobei bei einer Drehung des Rades 5 ein Schnittholzteil 2 in einem Aufgriffbereich eines Förderbereichs 9 zwischen dem ersten Klemmelement 7 und dem zweiten Klemmelement 8 eingeklemmt wird und in einem eingeklemmten Zustand entlang des Förderbereichs 9 transportieren wird, wobei das erste Klemmelement 7 unabhängig von dem zweiten Klemmelement 8 von der Steuervorrichtung gesteuert wird.

Dadurch ergibt sich der Vorteil, dass bei einem Einklemmen eines in der Staulage befindlichen Schnittholzteils 2 der Vorgang des Einklemmens individuell an die Dicke des Schnittholzteils 2 angepasst werden kann. Dadurch können auch Oberflächenbeschädigungen der Schnittholzteile 2 reduziert werden, sodass Schnittholzteile 2 mit unterschiedlichen Dicken und Breiten ohne Umbauarbeiten an dem Zuteiler 1 kontrolliert und schonend aus einer ungetakteten Förderung in eine taktgebundene Förderung überführt werden können. Durch die Steuerung des ersten Klemmelements 7 unabhängig von dem zweiten Klemmelement 8 kann bei einem nicht Zuteilen von Schnittholzteilen 2 eine Unruhe bei den aufgestauten Schnittholzteilen 2 vermieden werden, da einfach und schnell ein Verbleiben der Schnittholzteile 2 in der aufgestauten Lage mittels der Steuervorrichtung angesteuert werden kann. Dadurch können bei einem nicht Zuteilen die Schnittholzteile 2 in der Staulage verbleiben und müssen nicht gegen die Förderrichtung zurückgedrückt werden. Weiters kann durch die unabhängige Steuerung des ersten und des zweiten Klemmelements 7, 8 durch die Steuervorrichtung schnell und einfach eine Einklemmbewegung, welche zum Einklemmen des Schnittholzteils 2 zwischen dem ersten und dem zweiten Klemmelements 7, 8 ausgeführt wird, an unterschiedliche Maßen von Schnittholzteilen 2 angepasst werden. Dadurch kann ein möglichst gleichzeitiges Kontaktieren des Schnittholzteils 2 durch die beiden Klemmelemente 7, 8 erreicht werden, wodurch eine Unruhe bei dem Einklemmen des Schnittholzteils 2 und dadurch auch weiterer in der Staulage befindlichen Schnittholzteile 2 verhindert wird. Dadurch kann ein effizienter und wartungsarmer Zuteiler 1 geschaffen werden mit welchem auch bei einer hohen Taktrate kontrolliert Schnittholzteile 2 von einer ungetakteten Förderung in eine taktgebundene Förderung überführt werden können.

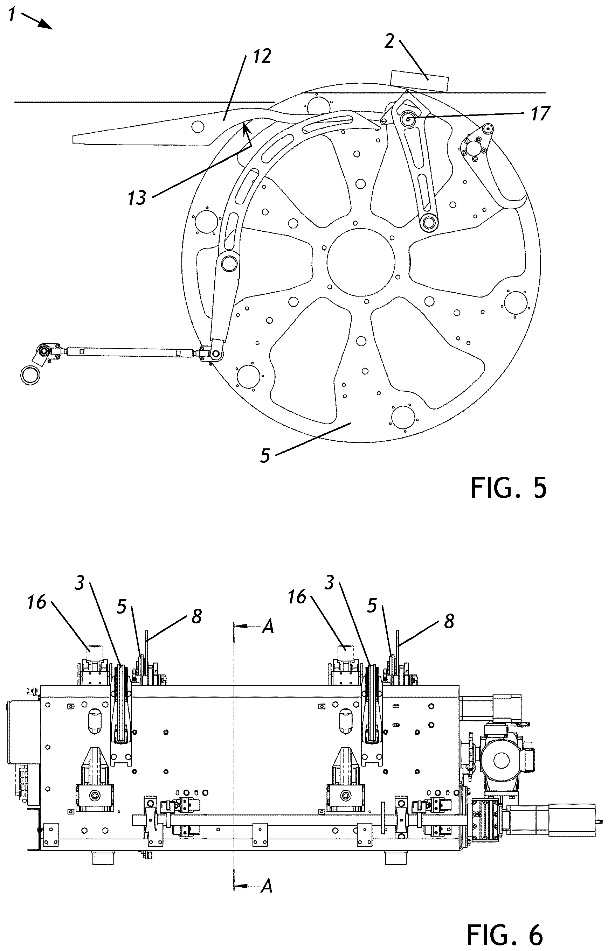

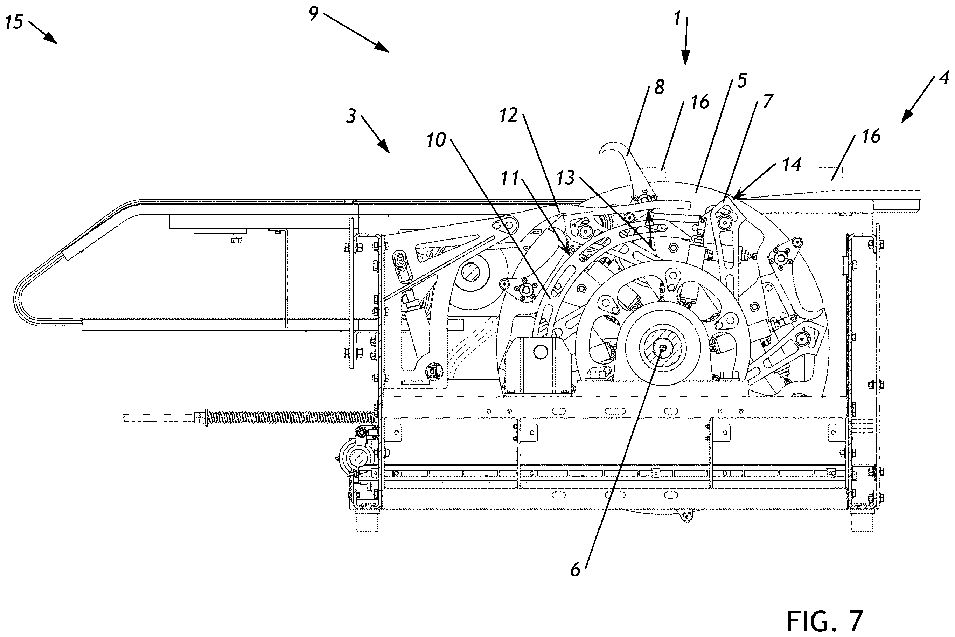

Bevorzugt reicht der Förderbereich 9 von dem Stauförderer 3 bis zu dem Mitnehmerförderer 4. Bevorzugt ist der Förderbereich 9 jener räumliche Bereich, welcher von den Schnittholzteilen 2 bei dem Transport bzw. bei der Förderung gequert wird. In Fig. 7 ist der in Fig. 6 gezeigte Schnitt nach AA einer bevorzugten Ausführungsform des Zuteilsystems 15 gezeigt, wobei bevorzugt die Anordnung des Stauförderers 3, des Zuteilers 1 und des Mitnehmerförderers 4 an dem Zuteilsystem 15 gezeigt ist und der Förderbereich 9 ersichtlich ist.

Bevorzugt sind die Förderrichtungen des Stauförderers 3, des Zuteilers 1 und des Mitnehmerförderers 4 gleich. Bevorzugt ist die Förderrichtung die Richtung in die die Schnittholzteile 2 gefördert bzw. zugeteilt werden.

Bevorzugt greift der Zuteiler 1 das Schnittholzteil 2 in dem Aufgriffbereich des Förderbereichs 9 auf. Der Aufgriffbereich ist dabei insbesondere der Bereich in dem das Schnittholzteil 2 von dem Zuteiler 1 eingeklemmt wird. Bevorzugt liegt wenigstens ein Schnittholzteil 2 in dem Aufgriffbereich von dem Stauförderer 3 aufgestaut vor.

Bevorzugt an einem ersten Ende des Förderbereichs 9 der Aufgriffbereich und an einem dem ersten Ende gegenüberliegend zweiten Ende ein Absetzbereich des Förderbereichs 9 angeordnet. Bevorzugt ist der Absetzbereich der Bereich an dem der Zuteiler 1 das eingeklemmte Schnittholzteil 2 wieder freigibt.

Bevorzugt werden die Schnittholzteile 2 von dem Stauförderer 3 aufgestaut. Dabei befinden sich die Schnittholzteile 2 bei dem Stauförderer 3 bevorzugt in einer Staulage. Bevorzugt liegen die Schnittholzteile 2 in der Staulage an den Längsseiten der Schnittholzteile 2 aneinandergereiht aneinander.

Bevorzugt kann der Stauförderer 3 als ein Förderband und/oder als ein Rollenband ausgebildet sein. Bevorzugt werden die Schnittholzteile 2 bis zu einem Anschlag, welcher in dem Förderbereich 9, insbesondere in dem Aufgriffbereich, angeordnet ist, transportiert.

Bevorzugt kann der Mitnehmerförderer 4 eine Vielzahl an Mitnehmer 16 umfassen. Bevorzugt wird von dem Zuteiler 1 pro Mitnehmer 16 ein Schnittholzteil 2 zugeteilt.

Bevorzugt kann vorgesehen sein, dass der Stauförderer 3 und/oder der Mitnehmerförderer 4 und/oder der Zuteiler 1 als Querförderer ausgebildet sind. Ein Querförderer ist insbesondere ein Förderer, welcher ein Schnittholzteil 2 quer zu seiner Längserstreckung transportiert.

Bevorzugt kann vorgesehen sein, dass das Zuteilsystem 15 lediglich den Stauförderer 3, den Zuteiler 1 und den Mitnehmerförderer 4 umfasst.

Bevorzugt kann vorgesehen sein, dass das Zuteilsystem 15 einen zwischen dem Zuteiler 1 und dem Mitnehmerförderer 4 angeordneten Beschleunigungsförderer umfasst. Bevorzugt kann der Beschleunigungsförderer die Schnittholzteile 2 auf eine vorgebbare Geschwindigkeit beschleunigen.

Es ist vorgesehen, dass der Zuteiler 1 wenigstens ein Rad 5 mit einer Drehachse 6 umfasst. Bevorzugt kann das Rad 5 als Scheibe, insbesondere mit Ausnehmungen, ausgebildet sein.

Es ist vorgesehen, dass an dem Zuteiler 1 ein erstes Klemmelement 7 und ein zweites Klemmelement 8 umfasst. Das erste und das zweite Klemmelement 7, 8 ist dabei an dem wenigstens einem Rad 5 befestigt.

Bevorzugt kann das erste Klemmelement 7 und/oder das zweite Klemmelement 8 an dem Rad 5 schwenkbar befestigt sein.

Bevorzugt kann der Zuteiler 1 zwei Räder 5 mit einer gemeinsamen Drehachse 6 umfassen. In Fig. 6 ist beispielhaft die bevorzugte Ausführungsart des Zuteilsystems 15 mit zwei gleichartig ausgebildeten Rädern 5 gezeigt. Weiters ist in Fig. 7 der in Fig. 6 gezeigte Schnitt nach AA gezeigt, wobei die in Fig. 6 gezeigten Räder 5 die gleiche Drehachse 6 besitzen. Bevorzugt können die beiden Räder 5 und die an den Rädern 5 befestigten Klemmelemente 7, 8 gleichartig ausgebildet sein. Dadurch ergibt sich der Vorteil, dass die zwei Räder 5 im Wesentlichen synchron betrieben werden können, wodurch das Schnittholzteil 2 besonders kontrolliert in eine taktgebundene Förderung überführt werden kann.

Der Zuteiler 1 ist dazu ausgebildet ein Schnittholzteil 2 zwischen dem ersten Klemmelement 7 und dem zweiten Klemmelement 8 einzuklemmen und mit dem ersten Klemmelement 7 und dem zweiten Klemmelement 8 festzuhalten. Bevorzugt ist die Klemmung des Schnittholzteils 2 durch Zusammenwirken des ersten und des zweiten Klemmelements 7, 8 verursacht.

Bevorzugt bilden das erste Klemmelement 7 und das zweite Klemmelement 8 zusammen eine Klemmeinheit aus. Bevorzugt ist die Klemmeinheit dazu ausgebildet ein einzelnes Schnittholzteil 2, insbesondere zwischen dem ersten Klemmelement 7 und dem zweiten Klemmelement 8, einzuklemmen.

Bevorzugt weist das Schnittholzteil 2 eine Breite, eine Dicke und eine Länge auf, wobei die Länge größer ist als die Breite und die Dicke. Bevorzugt kann das Schnittholzteil 2 ein Holzerzeugnis sein, welches durch Sägen von Rundholz parallel zu der Stammachse des Rundholzes hergestellt wird. Bevorzugt kann das Schnittholzteil 2 eine Dicke von mindestens 6 mm aufweisen.

Der Zuteiler 1 ist dazu ausgebildet das Schnittholzteil 2 in dem eingeklemmten Zustand entlang des Förderbereichs 9 zu transportieren. Bevorzugt wird das Schnittholzteil 2 bis zu dem Absetzbereich transportiert. Bevorzugt wird das Schnittholzteil 2 von dem Zuteiler 1 in dem Absetzbereich aus dem eingeklemmten Zustand freigegeben.

Es ist vorgesehen, dass der Zuteiler 1 wenigstens eine Steuervorrichtung umfasst. Die Steuervorrichtung ist dazu ausgebildet das erste Klemmelement 7 unabhängig von dem zweiten Klemmelement 8 zu steuern. In den Fig. 6 und 7 ist beispielhaft das Zuteilsystem 15 mit zwei Rädern 5 gezeigt, wobei die Räder 5 und die mit den Rädern 5 zusammenwirkenden Teile gleichartig ausgebildet sind. Dabei kann bevorzugt vorgesehen sein, dass für die an jedem Rad 5 befestigten ersten und zweiten Klemmelemente 7, 8 eine eigene Steuervorrichtung verwendet wird. Das in Fig. 6 beispielhaft gezeigte Zuteilsystem 15 umfasst daher zwei Steuervorrichtungen.

Bevorzugt kann vorgesehen sein, dass die Steuervorrichtung eine erste Führung 10 mit einer ersten Führungsbahn 11 umfasst und dass das erste Klemmelement 7 zum Einklemmen des Schnittholzteils 2 in dem Förderbereich 9 in einem ersten Drehbereich des Rades 5 an der ersten Führungsbahn 11 geführt ist. Dadurch ergibt sich der Vorteil, dass durch die Steuerung der ersten Führung 10 einfach und schnelle geregelt werden kann, ob ein Zuteilen von Schnittholzteilen 2 ausgeführt werden soll oder nicht. Dadurch können bei einem nicht Zuteilen von Schnitthölzern 2 die Schnitthölzer 2 in der Staulage verbleiben ohne gegen die Förderrichtung des Stauförderers 3 zurückgedrückt werden zu müssen.

In den Fig 1 bis 5 sind zumindest Teile der bevorzugten Ausführungsform des Zuteilers 1 in unterschiedlichen Stellungen gezeigt, wobei die erste Führung 10 mit der ersten Führungsbahn 11 ersichtlich ist. Weiters ist durch Vergleich der Fig. 1 bis 5 ersichtlich, wie das erste Klemmelement 7 zum Einklemmen des Schnittholzteils 2 in dem Förderbereich 9 in dem ersten Drehbereich des Rades 5 an der ersten Führungsbahn 11 geführt wird.

Bevorzugt ist der Drehbereich ein Drehwinkel des Rades 5. Der Drehbereich oder der Drehwinkel ist bevorzugt kleiner als eine volle Umdrehung des Rades 5, insbesondere kleiner als 360 Grad.

Bevorzugt ist der erste Drehbereich der Drehwinkel des Rades 5 in dem das erste Klemmelement 7 an der ersten Führungsbahn 11 geführt ist.

Bevorzugt ist der erste Drehbereich des Rades 5 maximal 140 Grad, besonders bevorzugt maximal 120 Grad, insbesondere maximal 100 Grad, groß.

Bevorzugt ist der erste Drehbereich des Rades 5 mindestens 40 Grad, besonders bevorzugt mindestens 60, insbesondere mindestens 80 Grad, groß.

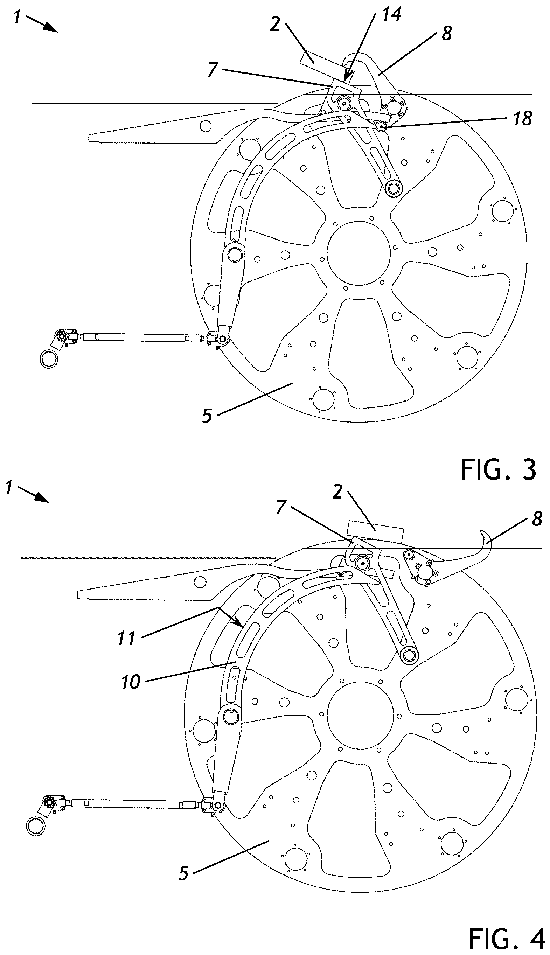

Bevorzugt kann das erste Klemmelement 7 eine erste Rolle 17 umfassen, welche erste Rolle 17 an der ersten Führung 10, insbesondere an der ersten Führungsbahn 11, geführt ist. In der Fig. 1 ist beispielhaft eine erste Stellung der bevorzugten Ausführungsart des Zuteilers 1 gezeigt. Hierbei ist ersichtlich, dass die erste Rolle 17 an einem Anfang der ersten Führungsbahn 11 in Kontakt ist und an der ersten Führungsbahn 11 geführt ist. In Fig. 2 ist beispielhaft eine zweite Stellung der bevorzugten Ausführungsart des Zuteilers 1 gezeigt, wobei das Führen der ersten Rolle 17 an der ersten Führungsbahn 11 dazu führt, dass das erste Klemmelement 7 mit dem Schnittholzteil 2 in Kontakt gelangt. In Fig. 4 ist beispielhaft eine vierte Stellung der bevorzugten Ausführungsart des Zuteilers 1 gezeigt, wobei die erste Rolle 17 ein Ende der ersten Führungsbahn 11 erreicht hat und das Schnittholzteil 2 aus dem eingeklemmten Zustand freigelassen wird. In Fig. 5 ist beispielhaft eine fünfte Stellung der bevorzugten Ausführungsart des Zuteilers 1 gezeigt, wobei die erste Rolle 17 nicht mehr an der ersten Führungsbahn 11 geführt ist und der erste Drehbereich verlassen wurde.

Bevorzugt ist der erste Drehbereich der Drehwinkel des Rades 5 in dem die erste Rolle 17 an der ersten Führungsbahn 11 geführt ist.

Erfindungsgemäß ist vorgesehen, dass die Steuervorrichtung eine zweite Führung 12 mit einer zweiten Führungsbahn 13 umfasst und dass das zweite Klemmelement 8 zum Einklemmen des Schnittholzteils 2 in dem Förderbereich 9 in einem zweiten Drehbereich des Rades 5 an der zweiten Führungsbahn 13 geführt ist. Dadurch ergibt sich der Vorteil, dass eine schnelle Anpassung der Einklemmung der Schnittholzteile 2 zwischen dem ersten und dem zweiten Klemmelement 7, 8 erreicht werden kann. Dadurch kann eine möglichst gleichzeitige Einklemmbewegung des ersten und des zweiten Klemmelements 7, 8 angesteuert werden, wodurch eine besonders kontrollierte Überführung der Schnittholzteile 2 in einen taktgebundene Förderung erreicht werden kann.

Bevorzugt ist der zweite Drehbereich der Drehwinkel des Rades 5 in dem das zweite Klemmelement 8 an der zweiten Führungsbahn 13 geführt ist.

Bevorzugt ist der zweite Drehbereich des Rades 5 maximal 120 Grad, besonders bevorzugt maximal 100 Grad, insbesondere maximal 80 Grad, groß.

Bevorzugt ist der zweite Drehbereich des Rades 5 mindestens 40 Grad, besonders bevorzugt mindestens 60, insbesondere mindestens 80 Grad, groß.

Bevorzugt kann das zweite Klemmelement 8 eine zweite Rolle 18 umfassen, welche zweite Rolle 18 an der zweiten Führung 12, insbesondere an der zweiten Führungsbahn 13, geführt ist. In der Fig. 1 ist beispielhaft die erste Stellung der bevorzugten Ausführungsart des Zuteilers 1 gezeigt, wobei die zweite Rolle 18 mit einem Anfang der zweiten Führungsbahn 13 in Kontakt ist und dieser geführt ist. In Fig. 2 ist beispielhaft eine zweite Stellung der bevorzugten Ausführungsart des Zuteilers 1 gezeigt, wobei das Führen der zweiten Rolle 18 an der zweiten Führungsbahn 13 dazu führt, dass das zweite Klemmelement 8 mit dem Schnittholzteil 2 in Kontakt gelangt und das Schnittholzteil 2 zwischen dem ersten und dem zweiten Klemmelement 7, 8 eingeklemmt wird. In Fig. 3 ist beispielhaft eine dritte Stellung der bevorzugten Ausführungsart des Zuteilers 1 gezeigt, wobei die zweite Rolle 18 ein Ende der zweiten Führungsbahn 13 erreicht hat. In Fig. 5 ist beispielhaft die fünfte Stellung der bevorzugten Ausführungsart des Zuteilers 1 gezeigt, wobei die zweite Rolle 18 nicht mehr an der zweiten Führungsbahn 13 geführt ist und der zweite Drehbereich verlassen wurde.

Bevorzugt ist der zweite Drehbereich der Drehwinkel des Rades 5 in dem die zweite Rolle 18 an der zweiten Führungsbahn 13 geführt ist.

Bevorzugt kann die Klemmkraft zum Einklemmen des Schnittholzteils 2 für das erste und das zweite Klemmelement 7, 8 durch das Führen des ersten und des zweiten Klemmelements 7, 8 an der ersten und der zweiten Führungsbahn 11, 13 erzeugt werden.

Erfindungsgemäß ist vorgesehen, dass die Steuervorrichtung eine Steuereinheit zum Steuern der ersten und der zweiten Führung 10, 12, insbesondere zum Steuern der Orientierung und der Lage der ersten und der zweiten Führungsbahn 11, 13, umfasst. Bevorzugt kann die Steuereinheit auch als Controller bezeichnet werden.

Bevorzugt kann vorgesehen sein, dass die erste und/oder die zweite Führung 10, 12 der Steuervorrichtung pneumatisch gesteuert ist.

Bevorzugt kann die Steuervorrichtung einen Motor zum Steuern der ersten und/oder der zweiten Führung 10, 13 umfassen. Bevorzugt kann die Steuereinheit den Motor der Steuervorrichtung steuern.

Bevorzugt kann der Zuteiler 1 an dem Rad 5 befestigte Pneumatikzylinder zum Rückstellen des ersten und/oder des zweiten Klemmelements 7, 8 umfassen. Dabei kann bevorzugt vorgesehen sein, dass durch das Einklemmen des Schnittholzteils 2 die Pneumatikzylinder in einen ausgefahrenen Zustand gebracht werden und durch Druckbeaufschlagung in einen eingefahrenen Zustand zurückgestellt werden. Dieses Zurückstellen in den eingefahrenen Zustand kann als Rückstellen des ersten und/oder des zweiten Klemmelements 7, 8 bezeichnet werden.

Alternativ kann ein Rückstellen des ersten und/oder des zweiten Klemmelements 7, 8 anstatt mit Pneumatikzylindern auch mittels Federn für die ersten und/oder zweiten Klemmelemente 7, 8 durchgeführt werden.

Bevorzugt kann die Steuervorrichtung dazu ausgebildet sein das erste Klemmelement 7 und das zweite Klemmelement 8 derart anzusteuern, dass eine Zeitdifferenz zwischen dem Zeitpunkt des Kontakts des ersten Klemmelements 7 mit dem Schnittholzteil 2 und dem Zeitpunkt des Kontakts des zweiten Klemmelements 8 mit dem Schnittholzteil 2 möglichst gering ist. Bevorzugt kann das erste Klemmelement 7 und das zweite Klemmelement 8 das Schnittholzteil 2 im Wesentlichen gleichzeitig kontaktieren. Dadurch kann eine besonders ruhige und kontrollierte Einklemmung des Schnittholzteils 2 zwischen dem ersten und dem zweiten Klemmelement 7, 8 erreicht werden.

Bevorzugt kann die Zeitdifferenz zwischen dem Zeitpunkt des Kontakts des ersten Klemmelements 7 mit dem Schnittholzteil 2 und dem Zeitpunkt des Kontakts des zweiten Klemmelements 8 mit dem Schnittholzteil 2 kleiner als 500 Millisekunden, besonders bevorzugt kleiner als 100 Millisekunden, insbesondere kleiner als 10 Millisekunden, sein.

Bevorzugt kann vorgesehen sein, dass das erste Klemmelement 7 eine im Wesentlichen ebene Klemmfläche 14 zum Einklemmen des Schnittholzteils 2 umfasst. In Fig. 3 ist beispielhaft die dritte Stellung der bevorzugten Ausführungsart des Zuteilers 1 gezeigt, wobei beispielhaft das zwischen der Klemmfläche 14 des ersten Klemmelements 7 und dem zweiten Klemmelement 8 eingeklemmte Schnittholzteil 2 gezeigt ist. Dadurch ergibt sich der Vorteil, dass eine besonders kontrollierte Mitnahme des Schnittholzteils 2 von dem ersten Klemmelement 7 erreicht werden kann, weil eine besonders gute Einklemmung des Schnittholzteils 2 zwischen dem ersten und dem zweiten Klemmelement 7, 8 erreicht werden kann.

Bevorzugt kann vorgesehen sein, dass das erste Klemmelement 7 und/oder das zweite Klemmelement 8 als Arm ausgebildet ist und dass eine Schwenkbewegung des Arms von der Steuervorrichtung vorgegeben ist. Dadurch ergibt sich der Vorteil, dass ein besonders einfacher und wartungsarmer Aufbau der Klemmelemente 7, 8 erreicht werden kann.

Bevorzugt kann sich der Arm des ersten und/oder des zweiten Klemmelements 7, 8 von der Befestigung des ersten und/oder des zweiten Klemmelements 7, 8 an dem Rad 5 weg erstrecken.

Bevorzugt kann die erste Führung 10, insbesondere die erste Führungsbahn 11, und/oder die zweite Führung 12, insbesondere die zweite Führungsbahn 13, die Schwenkbewegung des Arms des ersten Klemmelements 7 und/oder des zweiten Klemmelements 8 vorgeben.

Bevorzugt kann vorgesehen sein, dass das zweite Klemmelement 8, insbesondere der Arm des zweiten Klemmelements 8, hakenförmig ausgebildet ist. Eine derartige hakenförmige Ausbildung des zweiten Klemmelements 8 ist beispielhaft in den Fig. 1 bis 7 gezeigt. Dadurch ergibt sich der Vorteil, dass unterschiedlich dimensionierte Schnitthölzer ohne Umbauarbeiten des Zuteilers 1 zwischen dem ersten und dem zweiten Klemmelement 7, 8 eingeklemmt werden können.

Bevorzugt kann die erste Rolle 17 an dem ersten Klemmelement 7 zwischen der Klemmfläche 14 und der Befestigung des ersten Klemmelements 7 an dem Rad 5 befestigt sein.

Bevorzugt kann das zweite Klemmelement 8 einen Fortsatz umfassen, wobei an dem Fortsatz die zweite Rolle 18 befestig ist. Bevorzugt kann sich der Fortsatz von der Befestigung des zweiten Klemmelements 8 an dem Rad 5 weg erstrecken.

Bevorzugt kann sich der Fortsatz und der Arm des zweiten Klemmelements 8 in unterschiedliche Richtung von der Befestigung des zweiten Klemmelements 8 an dem Rad 5 weg erstrecken.

Bevorzugt kann vorgesehen sein, dass an dem Rad 5 mehrere erste Klemmelemente 7 und mehrere zweite Klemmelemente 8 befestigt sind und dass die ersten Klemmelemente 7 jeweils in dem ersten Drehbereich des Rades 5 an der ersten Führungsbahn 11 und die zweiten Klemmelemente 8 jeweils in dem zweiten Drehbereich des Rades 5 an der zweiten Führungsbahn 13 geführt sind. Dadurch ergibt sich der Vorteil, dass eine möglichst hohe Taktrate zum kontrollierten Überführen von Schnittholzteile 2 von einer ungetakteten Förderung in eine taktgebundene Förderung erreicht werden kann.

Sofern der Zuteiler 1 mehr als ein Rad 5 umfasst, kann bevorzugt vorgesehen sein, dass an jedem Rad 5 mehrere erste Klemmelemente 7 und mehrere zweite Klemmelemente 8 befestigt sind.

Bevorzugt kann vorgesehen sein, dass sich wenigstens ein Mitnehmer 16 des Mitnehmerförderers 4 in einem Absetzbereich des Förderbereichs 9 mit einer Mitnehmergeschwindigkeit bewegt und dass das erste Klemmelement 7 und das zweite Klemmelement 8 das Schnittholzteil 2 aus dem eingeklemmten Zustand in den Absetzbereich freigeben. Dadurch ergibt sich der Vorteil, dass eine Übergabe der Schnittholzteile 2 direkt an den Mitnehmerförderer 4 erreicht werden kann, wodurch auch bei stark verformten Brettern eine deutlich schnellere und kontrolliertere Übergabe der Schnittholzteile 2 an den Mitnehmerförderer 4 erreicht werden kann. Dadurch kann die Anzahl an Schiefläufen nach der Übergabe an dem Mitnehmerförderer 4, also die Bewegung eines Schnittholzes 2, welches zusätzlich zu der Translation bei der Förderung eine Rotation ausführt, deutlich verringert werden. Dadurch kann ein möglichst störungsfreier Betrieb auch bei unterschiedlichen Qualitäten von Schnitthölzern 2 bei dem Zuteilen erreicht werden.

Bevorzugt kann vorgesehen sein, dass der Stauförderer 3 in einem Aufgriffbereich des Förderbereichs 9 eine bewegliche Stauförderrückhaltevorrichtung umfasst. Dadurch ergibt sich der Vorteil, dass die Schnittholzteile 2 an einer vorgegebenen Position anliegen können, wodurch die Schnittholteile 2 schnell und einfach zwischen dem ersten und dem zweiten Klemmelement 7, 8 eingeklemmt werden können.

Bevorzugt kann die Staurückhaltevorrichtung als Hacken oder als stufenförmige Erhebung ausgebildet sein. Bevorzugt ist die Staurückhaltevorrichtung der Anschlag in dem Förderbereich 9 bis zu dem der Stauförderer 3 die Schnittholzteile 2 transportiert. In Fig. 1 ist beispielhaft das Schnittholzteil 2 angestaut an einer stufenförmigen Erhebung gezeigt.

Bevorzugt kann die Stauförderrückhaltvorrichtung einen vorgebbar entfernbaren Anschlag für den Stauförderer 3 ausbilden.

Bevorzugt wird das Schnittholzteil 2 von dem Stauförderer 3 solange transportiert bis dieses an der Staurückhaltevorrichtung ansteht. Dann wird dieses Schnittholzteil 2 bevorzugt von dem Zuteiler 1 eingeklemmt und die Staurückhaltevorrichtung aus einer Rückhalteposition wegbewegt, wobei die Staurückhaltevorrichtung das eingeklemmte Schnittholzteil 2 freigibt, welches dann von dem Zuteiler 1 abtransportiert wird. Danach wird die Staurückhaltevorrichtung wieder in die Rückhalteposition bewegt, um nachfolgende Schnittholzteile 2 des Stauförderers 3 rückzuhalten.

Alternativ kann der Stauförderer 3 bevorzugt einen festen Anschlag aufweisen, wobei der Zuteiler 1 das Schnittholzteil 2 über den festen Anschlag hinweghebt.

Bevorzugt kann vorgesehen sein, dass der Stauförderer 3 einen mit dem Zuteiler 1 wirkverbundenen Sensor zur Messung der Dicke des Schnittholzteils 2 umfasst und dass die Steuervorrichtung die gemessene Dicke des Schnittholzteils 2 bei der Steuerung des ersten und des zweiten Klemmelements 7, 8 berücksichtigt. Dadurch ergibt sich der Vorteil, dass das Einklemmen zwischen dem ersten und dem zweiten Klemmelement 7, 8 besonders einfach und schnell an Schnitthölzern 2 unterschiedlicher Dicken angepasst werden kann.

Bevorzugt kann der Sensor Teil eines Sensorsystems sein. Bevorzugt kann das Sensorsystem eine Lichtschrankenanlage umfassen. Bevorzugt kann das Sensorsystem mit der Steuervorrichtung verbunden sein, wobei die Steuervorrichtung dazu ausgebildet sein kann eine Einklemmbewegung des ersten und des zweiten Klemmelements 7, 8 lediglich dann auszuführen, wenn ein Schnittholzteil 2 in dem Aufgriffbereich von dem Sensorsystem erfasst ist.

Bevorzugt kann vorgesehen sein, dass sich ein Mitnehmer 16 des Mitnehmerförderers 4 in einem Absetzbereich des Förderbereichs 9 mit einer Mitnehmergeschwindigkeit bewegt, dass das Schnittholzteil 2 in dem eingeklemmten Zustand im Wesentlichen auf die Mitnehmergeschwindigkeit beschleunigt wird und dass das Schnittholzteil 2 von dem ersten Klemmelement 7 und dem zweiten Klemmelement 8 aus dem eingeklemmten Zustand in den Absetzbereich freigeben wird. Dadurch ergibt sich der Vorteil, dass eine Übergabe der Schnittholzteile 2 direkt an den Mitnehmerförderer 4 erreicht werden kann, wodurch auch bei stark verformten Brettern eine deutlich schnellere und kontrolliertere Übergabe von Schnittholzteilen 2 an den Mitnehmerförderer 4 erreicht werden kann. Dadurch kann die Anzahl an Schiefläufen deutlich verringert werden. Dadurch kann ein möglichst störungsfreier Betrieb auch bei unterschiedlichen Qualitäten von Schnitthölzern 2 bei dem Zuteilen erreicht werden.

Bevorzugt kann vorgesehen sein, dass von der Steuervorrichtung eine Dicke des Schnittholzteils 2 bei der Steuerung des ersten und des zweiten Klemmelements 7, 8 berücksichtigt wird. Dadurch ergibt sich der Vorteil, dass die Schnittholzteile 2 besonders kontrolliert zwischen dem ersten und dem zweiten Klemmelement 7, 8 eingeklemmt werden können.

Bevorzugt kann die Dicke des Schnittholzteils 2 vor dem Zuführen des Schnittholzteils 2 zu dem Stauförderer 3 gemessen werden. Bevorzugt kann die gemessene Dicke des Schnittholzteils 2 der Steuervorrichtung vorgegeben werden. Dabei kann in vorteilhafterweise bei einem Zuteilen von Schnittholzern 2 mit der gleichen Dicke lediglich einmal die Dicke von einem Schnittholzteil 2 gemessen werden, wobei der Zuteiler 1 auf die gemessene Dicke des Schnittholzteils 2 eingestellt werden kann. Dadurch kann beispielsweise eine erste Charge Schnittholzteile 2 mit einer ersten Dicke dem Stauförderer 3 zugeführt werden, wobei der Steuervorrichtung die erste Dicke vorgegeben oder der Steuereinheit eingespielt wird und die Steuervorrichtung die erste Dicke bei dem Einklemmen der Schnittholzteile 2 der ersten Charge berücksichtigt. Anschließend kann eine zweite Charge Schnittholzteile 2 mit einer zweiten Dicke dem Stauförderer 3 zugeführt werden, wobei die zweite Dicke dem Stauförderer 3 vorgegeben oder der Steuereinheit eingespielt wird und die Steuervorrichtung die zweite Dicke bei dem Einklemmen der Schnittholzteile der zweiten Charge berücksichtigt.

Bevorzugt kann vorgesehen sein, dass die Dicke des Schnittholzteils 2 von einem mit dem Zuteiler 1 wirkverbundenen Sensor des Stauförderers 3 gemessen wird. Dadurch ergibt sich der Vorteil, dass das Einklemmen zwischen dem ersten und dem zweiten Klemmelement 7, 8 besonders einfach und schnell an Schnitthölzern 2 unterschiedlicher Dicken angepasst werden kann.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Mittels eines ordnenden Zahlwortes, beispielweise "erster", "zweiter" oder "dritter", werden insbesondere ein Merkmal X bzw. ein Gegenstand Y in mehreren Ausführungsformen unterschieden, sofern dies nicht durch die Offenbarung der Erfindung anderweitig definiert wird. Insbesondere bedeutet ein Merkmal X bzw. Gegenstand Y mit einem ordnenden Zahlwort in einem Anspruch nicht, dass eine unter diesen Anspruch fallende Ausgestaltung der Erfindung ein weiteres Merkmal X bzw. einen weiteren Gegenstand Y aufweisen muss.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Zuteiler (1) zum Zuteilen von Schnittholzteilen (2) von einem Stauförderer (3) zu einem Mitnehmerförderer (4), wobei der Zuteiler (1) wenigstens ein Rad (5) mit einer Drehachse (6) und wenigstens eine Steuervorrichtung umfasst, wobei an dem Rad (5) mehrere erste Klemmelemente (7) und mehrere zweite Klemmelemente (8) befestigt sind, wobei der Zuteiler (1) dazu ausgebildet ist bei einer Drehung des Rades (5) ein Schnittholzteil (2) in einem Förderbereich (9) zwischen einem ersten und einem zweiten Klemmelement (7, 8) einzuklemmen und in einem eingeklemmten Zustand entlang des Förderbereichs (9) zu transportieren, wobei die Steuervorrichtung dazu ausgebildet ist das erste Klemmelement (7) unabhängig von dem zweiten Klemmelement (8) zu steuern, wobei die Steuervorrichtung eine erste Führung (10) mit einer ersten Führungsbahn (11) umfasst und wobei das erste Klemmelement (7) zum Einklemmen des Schnittholzteils (2) in dem Förderbereich (9) in einem ersten Drehbereich des Rades (5) an der ersten Führungsbahn (11) geführt ist, **dadurch gekennzeichnet, dass** die Steuervorrichtung eine zweite Führung (12) mit einer zweiten Führungsbahn (13) umfasst und dass das zweite Klemmelement (8) zum Einklemmen des Schnittholzteils (2) in dem Förderbereich (9) in einem zweiten Drehbereich des Rades (5) an der zweiten Führungsbahn (13) geführt ist, dass die Steuervorrichtung eine Steuereinheit zum Steuern der Orientierung und der Lage der ersten und der zweiten Führungsbahn (11, 13) umfasst, und dass die ersten Klemmelemente (7) jeweils in dem ersten Drehbereich des Rades (5) an der ersten Führungsbahn (11) und die zweiten Klemmelemente (8) jeweils in dem zweiten Drehbereich des Rades (5) an der zweiten Führungsbahn (13) geführt sind.

2. Zuteiler (1) nach Anspruch 1, **dadurch gekennzeichnet, dass** der erste Drehbereich des Rades (5) maximal 140 Grad, besonders bevorzugt maximal 120 Grad, insbesondere maximal 100 Grad, groß ist.

3. Zuteiler (1) nach Anspruch 1 oder 2, **dadurch gekennzeichnet, dass** der zweite Drehbereich des Rades (5) maximal 120 Grad, besonders bevorzugt maximal 100 Grad, insbesondere maximal 80 Grad, groß ist.

4. Zuteiler (1) nach einem der Ansprüche 1 bis 3, **dadurch gekennzeichnet, dass** das erste Klemmelement (7) eine erste Rolle (17) umfasst, welche erste Rolle (17) an der ersten Führungsbahn (11) geführt ist.

5. Zuteiler (1) nach einem der Ansprüche 1 bis 4, **dadurch gekennzeichnet, dass** das zweite Klemmelement (8) eine zweite Rolle (18) umfasst, welche zweite Rolle (18) an der zweiten Führungsbahn (13) geführt ist.

6. Zuteiler (1) nach einem der Ansprüche 1 bis 5, **dadurch gekennzeichnet, dass** das erste Klemmelement (7) eine im Wesentlichen ebene Klemmfläche (14) zum Einklemmen des Schnittholzteils (2) umfasst.

7. Zuteiler (1) nach einem der Ansprüche 1 bis 6, **dadurch gekennzeichnet, dass** das erste Klemmelement (7) und/oder das zweite Klemmelement (8) als Arm ausgebildet ist und dass eine Schwenkbewegung des Arms von der Steuervorrichtung vorgegeben ist.

8. Zuteilsystem (15) umfassend einen Stauförderer (3) und einen Mitnehmerförderer (4), **dadurch gekennzeichnet, dass** ein Zuteiler (1) nach einem der Ansprüche 1 bis 7 zwischen dem Stauförderer (3) und dem Mitnehmerförderer (4) angeordnet ist, um ein Schnittholzteil (2) von dem Stauförderer (3) zu dem Mitnehmerförderer (4) zu transportieren.

9. Zuteilsystem (15) nach Anspruch 8, **dadurch gekennzeichnet, dass** sich wenigstens ein Mitnehmer (16) des Mitnehmerförderers (4) in einem Absetzbereich des Förderbereichs (9) mit einer Mitnehmergeschwindigkeit bewegt und dass das erste Klemmelement (7) und das zweite Klemmelement (8) das Schnittholzteil (2) aus dem eingeklemmten Zustand in den Absetzbereich freigeben.

10. Zuteilsystem (15) nach Anspruch 8 oder 9, **dadurch gekennzeichnet, dass** der Stauförderer (3) in einem Aufgriffbereich des Förderbereichs (9) eine bewegliche Stauförderrückhaltevorrichtung umfasst.

11. Zuteilsystem (15) nach einem der Ansprüche 8 bis 10, **dadurch gekennzeichnet, dass** der Stauförderer (3) einen mit dem Zuteiler (1) wirkverbundenen Sensor zur Messung der Dicke des Schnittholzteils (2) umfasst und dass die Steuervorrichtung die gemessene Dicke des Schnittholzteils (2) bei der Steuerung des ersten und des zweiten Klemmelements (7, 8) berücksichtigt.

12. Verfahren zum Zuteilen von Schnittholzteilen (2) von einem Stauförderer (3) zu einem Mitnehmerförderer (4) mit einem Zuteiler (1), wobei der Zuteiler (1) wenigstens ein Rad (5) mit einer Drehachse (6) und wenigstens eine Steuervorrichtung umfasst, wobei an dem Rad (5) mehrere erste Klemmelemente (7) und mehrere zweite Klemmelemente (8) befestigt sind, wobei bei einer Drehung des Rades (5) ein Schnittholzteil (2) in einem Aufgriffbereich eines Förderbereichs (9) zwischen einem ersten Klemmelement (7) und einem zweiten Klemmelement (8) eingeklemmt wird und in einem eingeklemmten Zustand entlang des Förderbereichs (9) transportieren wird, wobei das erste Klemmelement (7) unabhängig von dem zweiten Klemmelement (8) von der Steuervorrichtung gesteuert wird, wobei die Steuervorrichtung eine erste Führung (10) mit einer ersten Führungsbahn (11) umfasst und wobei das erste Klemmelement (7) zum Einklemmen des Schnittholzteils (2) in dem Förderbereich (9) in einem ersten Drehbereich des Rades (5) an der ersten Führungsbahn (11) geführt wird, **dadurch gekennzeichnet, dass** die Steuervorrichtung eine zweite Führung (12) mit einer zweiten Führungsbahn (13) umfasst und dass das zweite Klemmelement (8) zum Einklemmen des Schnittholzteils (2) in dem Förderbereich (9) in einem zweiten Drehbereich des Rades (5) an der zweiten Führungsbahn (13) geführt wird, dass die Orientierung und Lage der ersten und der zweiten Führungsbahn (11, 13) mittels einer Steuereinheit der Steuervorrichtung gesteuert wird, und dass die ersten Klemmelemente (7) jeweils in dem ersten Drehbereich des Rades (5) an der ersten Führungsbahn (11) und die zweiten Klemmelemente (8) jeweils in dem zweiten Drehbereich des Rades (5) an der zweiten Führungsbahn (13) geführt werden.

13. Verfahren nach Anspruch 12, **dadurch gekennzeichnet, dass** sich ein Mitnehmer (16) des Mitnehmerförderers (4) in einem Absetzbereich des Förderbereichs (9) mit einer Mitnehmergeschwindigkeit bewegt, dass das Schnittholzteil (2) in dem eingeklemmten Zustand im Wesentlichen auf die Mitnehmergeschwindigkeit beschleunigt wird und dass das Schnittholzteil (2) von dem ersten Klemmelement (7) und dem zweiten Klemmelement (8) aus dem eingeklemmten Zustand in den Absetzbereich freigeben wird.

14. Verfahren nach Anspruch 12 oder 13, **dadurch gekennzeichnet, dass** von der Steuervorrichtung eine Dicke des Schnittholzteils (2) bei der Steuerung des ersten und des zweiten Klemmelements (7, 8) berücksichtigt wird.

15. Verfahren nach Anspruch 14, **dadurch gekennzeichnet, dass** die Dicke des Schnittholzteils (2) von einem mit dem Zuteiler (1) wirkverbundenen Sensor des Stauförderers (3) gemessen wird.

## Claims

1. A feeder (1) for feeding sawn wood pieces (2) from an accumulating conveyor (3) to a drag conveyor (4), wherein the feeder (1) comprises at least one wheel (5) with an axis of rotation (6) and at least one control device, wherein a plurality of first clamping elements (7) and a plurality of second clamping elements (8) are fastened to the wheel (5), wherein the feeder (1) is designed to clamp a sawn wood piece (2) in place in a conveying region (9) between the first and the second clamping element (7, 8) when the wheel (5) rotates and to transport it in a clamped state along the conveying region (9), wherein the control device is designed to control the first clamping element (7) independently of the second clamping element (8), wherein the control device comprises a first guide (10) with a first guideway (11) and wherein the first clamping element (7) for clamping the sawn wood piece (2) in place in the conveying region (9) is guided on the first guideway (11) in a first rotation range of the wheel (5), **characterized in that** the control device comprises a second guide (12) with a second guideway (13) and that the second clamping element (8) for clamping the sawn wood piece (2) in place in the conveying region (9) is guided on the second guideway (13) in a second rotation range of the wheel (5), that the control device comprises a control unit for controlling the orientation and the position of the first and the second guideways (11, 13), and that the first clamping elements (7) are each guided on the first guideway (11) in the first rotation range of the wheel (5) and the second clamping elements (8) are each guided on the second guideway (13) in the second rotation range of the wheel (5).

2. The feeder (1) according to claim 1, **characterized in that** the first rotation range of the wheel (5) is a maximum of 140 degrees, especially preferably a maximum of 120 degrees, in particular a maximum of 100 degrees.

3. The feeder (1) according to claim 1 or 2, **characterized in that** the second rotation range of the wheel (5) is a maximum of 120 degrees, especially preferably a maximum of 100 degrees, in particular a maximum of 80 degrees.

4. The feeder (1) according to any one of claims 1 to 3, **characterized in that** the first clamping element (7) comprises a first roller (17), which first roller (17) is guided on the first guideway (11).

5. The feeder (1) according to any one of claims 1 to 4, **characterized in that** the second clamping element (8) comprises a second roller (18), which second roller (18) is guided on the second guideway (13).

6. The feeder (1) according to any one of claims 1 to 5, **characterized in that** the first clamping element (7) comprises a substantially flat clamping surface (14) for clamping the sawn wood piece (2).

7. The feeder (1) according to any one of claims 1 to 6, **characterized in that** the first clamping element (7) and/or the second clamping element (8) is embodied as an arm and that a pivoting movement of the arm is predetermined by the control device.

8. A feeding system (15) comprising an accumulating conveyor (3) and a drag conveyor (4), **characterized in that** a feeder (1) according to any one of claims 1 to 7 is arranged between the accumulating conveyor (3) and the drag conveyor (4) in order to transport a sawn wood piece (2) from the accumulating conveyor (3) to the drag conveyor (4).

9. The feeding system (15) according to claim 8, **characterized in that** at least one flight (16) of the drag conveyor (4) moves in a delivery region of the conveying region (9) at a flight speed and that the first clamping element (7) and the second clamping element (8) release the sawn wood piece (2) from the clamped state into the delivery region.

10. The feeding system (15) according to claim 8 or 9, **characterized in that** the accumulating conveyor (3) comprises a movable accumulating conveyor retaining device in a pick-up region of the conveying region (9).

11. The feeding system (15) according to any one of claims 8 to 10, **characterized in that** the accumulating conveyor (3) comprises a sensor that is operatively connected to the feeder (1) for measuring the thickness of the sawn wood piece (2) and that the control device takes the measured thickness of the sawn wood piece (2) into account when controlling the first and second clamping elements (7, 8).

12. A method for feeding sawn wood pieces (2) from an accumulating conveyor (3) to a drag conveyor (4) with a feeder (1), wherein the feeder (1) comprises at least one wheel (5) with an axis of rotation (6) and at least one control device, wherein a plurality of first clamping elements (7) and a plurality of second clamping elements (8) are fastened to the wheel (5), wherein, when the wheel (5) rotates, a sawn wood piece (2) is clamped in a pick-up region of a conveying region (9) between the first clamping element (7) and the second clamping element (8) and is transported in a clamped state along the conveying region (9), wherein the first clamping element (7) is controlled independently of the second clamping element (8) by the control device, wherein the control device comprises a first guide (10) with a first guideway (11) and wherein the first clamping element (7) for clamping the sawn wood piece (2) in the conveying region (9) in a first rotation range of the wheel (5) is guided on the first guideway (11), **characterized in that** the control device comprises a second guide (12) with a second guideway (13) and that the second clamping element (8) for clamping the sawn wood piece (2) in the conveying region (9) is guided on the second guideway (13) in a second rotation range of the wheel (5), that the orientation and position of the first and second guideways (11, 13) are controlled by means of a control unit of the control device, and that the first clamping elements (7) are each guided on the first guideway (11) in the first rotation range of the wheel (5) and the second clamping elements (8) are each guided on the second guideway (13) in the second rotation range of the wheel (5).

13. The method according to claim 12, **characterized in that** a flight (16) of the drag conveyor (4) moves in a delivery region of the conveying region (9) at a flight speed, that the sawn wood piece (2) in the clamped state is accelerated substantially to the flight speed, and that the sawn wood piece (2) is released by the first clamping element (7) and the second clamping element (8) from the clamped state into the delivery region.

14. The method according to claim 12 or 13, **characterized in that** the control device takes into account a thickness of the sawn wood piece (2) when controlling the first and the second clamping element (7, 8).

15. The method according to claim 14, **characterized in that** the thickness of the sawn wood piece (2) is measured by a sensor of the accumulating conveyor (3) that is operatively connected to the feeder (1).

## Revendications

1. Distributeur (1) de distribution destiné à distribuer des pièces de bois scié (2) depuis un convoyeur d'accumulation (3) vers un convoyeur d'entraînement (4), le distributeur (1) comprenant au moins une roue (5) avec un axe de rotation (6) et au moins un dispositif de commande, plusieurs premiers éléments de serrage (7) et plusieurs seconds éléments de serrage (8) étant fixés à la roue (5), le distributeur (1) étant conçu pour, lors de la rotation de la roue (5), de serrer une pièce de bois scié (2) dans une zone de transport (9) entre les premier et deuxième éléments de serrage (7, 8) et de la transporter à l'état serré le long de la zone de transport (9), le dispositif de commande étant conçu pour commander le premier élément de serrage (7) indépendamment du deuxième élément de serrage (8), le dispositif de commande comprenant un premier guide (10) avec une première glissière (11) et le premier élément de serrage (7) étant guidé, pour serrer la pièce de bois scié (2) dans la zone de transport (9), dans une première zone de rotation de la roue (5) est guidé sur la première glissière (11), **caractérisé en ce que** le dispositif de commande comprend un deuxième guide (12) avec une deuxième glissière (13) et **en ce que** le deuxième élément de serrage (8) destiné à serrer la pièce de bois scié (2) dans la zone de transport (9) est guidé, dans une deuxième zone de rotation de la roue (5) le long de la deuxième glissière (13), que le dispositif de commande comprend une unité de commande pour commander l'orientation et la position des première et deuxième glissières (11, 13), et que les premiers éléments de serrage (7) sont guidés respectivement dans la première zone de rotation de la roue (5) sur la première glissière (11) et les seconds éléments de serrage (8) sont guidés respectivement dans la seconde zone de rotation de la roue (5) sur la seconde glissière (13).

2. Distributeur (1) selon la revendication 1, **caractérisé en ce que** la première plage de rotation de la roue (5) est de 140 degrés au maximum, de préférence de 120 degrés au maximum, et plus particulièrement de 100 degrés au maximum.

3. Distributeur (1) selon la revendication 1 ou 2, **caractérisé en ce que** la seconde plage de rotation de la roue (5) est de 120 degrés au maximum, de préférence de 100 degrés au maximum, et plus particulièrement de 80 degrés au maximum.

4. Distributeur (1) selon l'une des revendications 1 à 3, **caractérisé en ce que** le premier élément de serrage (7) comprend un premier rouleau (17), lequel premier rouleau (17) est guidé sur la première glissière (11).

5. Distributeur (1) selon l'une des revendications 1 à 4, **caractérisé en ce que** le deuxième élément de serrage (8) comprend un deuxième rouleau (18), lequel deuxième rouleau (18) est guidé sur la deuxième glissière (13).

6. Distributeur (1) selon l'une des revendications 1 à 5, **caractérisé en ce que** le premier élément de serrage (7) comprend une surface de serrage (14) sensiblement plane destinée à serrer la pièce de bois scié (2).

7. Distributeur (1) selon l'une des revendications 1 à 6, **caractérisé en ce que** le premier élément de serrage (7) et/ou le deuxième élément de serrage (8) est conçu sous la forme d'un bras et **en ce qu'**un mouvement de pivotement du bras est déterminé par le dispositif de commande.

8. Système de distribution (15) comprenant un convoyeur à accumulation (3) et un convoyeur d'entraînement (4), **caractérisé en ce qu'**un distributeur (1) selon l'une des revendications 1 à 7 est disposé entre le convoyeur d'accumulation (3) et le convoyeur d'entraînement (4) afin de transporter une pièce de bois scié (2) du convoyeur d'accumulation (3) vers le convoyeur d'entraînement (4).

9. Système de distribution (15) selon la revendication 8, **caractérisé en ce qu'**au moins un entraîneur (16) du convoyeur à entraîneurs (4) se déplace à une vitesse d'entraînement dans une zone de déchargement de la zone de convoyage (9) et **en ce que** le premier élément de serrage (7) et le deuxième élément de serrage (8) libèrent la pièce de bois scié (2) de l'état serré vers la zone de déchargement.

10. Système de distribution (15) selon la revendication 8 ou 9, **caractérisé en ce que** le convoyeur d'accumulation (3) comprend, dans une zone de prélèvement de la zone de convoyage (9), un dispositif mobile de retenue du convoyeur d'accumulation.

11. Système de distribution (15) selon l'une des revendications 8 à 10, **caractérisé en ce que** le convoyeur à accumulation (3) comprend un capteur relié fonctionnellement au distributeur (1) pour mesurer l'épaisseur de la pièce de bois scié (2) et **en ce que** le dispositif de commande tient compte de l'épaisseur mesurée de la pièce de bois scié (2) lors de la commande des premier et deuxième éléments de serrage (7, 8).

12. Procédé pour distribuer des pièces de bois scié (2) d'un convoyeur à accumulation (3) vers un convoyeur d'entraînement (4) à l'aide d'un distributeur (1), le distributeur (1) comprenant au moins une roue (5) avec un axe de rotation (6) et au moins un dispositif de commande, plusieurs premiers éléments de serrage (7) et plusieurs seconds éléments de serrage (8) étant fixés à la roue (5), et lors de la rotation de la roue (5), une pièce de bois scié (2) est serrée dans une zone de préhension d'une zone de transport (9) entre le premier élément de serrage (7) et le deuxième élément de serrage (8) et est transportée à l'état serré le long de la zone de transport (9), le premier élément de serrage (7) étant commandé indépendamment du deuxième élément de serrage (8) par le dispositif de commande, le dispositif de commande comprenant un premier guide (10) avec une première glissière (11) et le premier élément de serrage (7) étant guidé sur la première glissière (11) dans une première zone de rotation de la roue (5) pour serrer la pièce de bois scié (2) dans la zone de transport (9), **caractérisé en ce que** le dispositif de commande comprend un deuxième guide (12) avec une deuxième glissière (13) et **en ce que** le deuxième élément de serrage (8) destiné à serrer la pièce de bois scié (2) dans la zone de transport (9) est guidé, dans une deuxième zone de rotation de la roue (5) le long de la deuxième glissière (13), que l'orientation et la position des première et deuxième glissières (11, 13) sont commandées au moyen d'une unité de commande du dispositif de commande, et que les premiers éléments de serrage (7) sont guidés respectivement dans la première zone de rotation de la roue (5) sur la première glissière (11) et les seconds éléments de serrage (8) sont guidés respectivement dans la seconde zone de rotation de la roue (5) sur la seconde glissière (13).

13. Procédé selon la revendication 12, **caractérisé en ce qu'**un entraîneur (16) du convoyeur à entraîneurs (4) se déplace dans une zone de dépose de la zone de convoyage (9) à une vitesse d'entraînement, **en ce que** la pièce de bois scié (2) est accélérée, à l'état serré, essentiellement à la vitesse de l'entraîneur, et **en ce que** la pièce de bois scié (2) est libérée par le premier élément de serrage (7) et le deuxième élément de serrage (8) de l'état serré vers la zone de dépose.

14. Procédé selon la revendication 12 ou 13, **caractérisé en ce que** le dispositif de commande tient compte de l'épaisseur de la pièce de bois sciée (2) lors de la commande des premier et deuxième éléments de serrage (7, 8).

15. Procédé selon la revendication 14, **caractérisé en ce que** l'épaisseur de la pièce de bois scié (2) est mesurée par un capteur du convoyeur à accumulation (3) relié fonctionnellement au distributeur (1).
